# EUROPEAN PATENT APPLICATION

(11) **EP 4 814 888 A1**
(43) Date of publication of application: **30.09.2026**
(21) Application number: 26164839.8
(22) Date of filing: 13.03.2026
(51) Int. Cl.: G06V 10/762, G06V 10/778

(54) **METHOD OF CREATING BASIC MODEL FOR MACHINE LEARNING MODELS FOR DEFECT DETECTION, AND METHOD OF CREATING MACHINE LEARNING MODEL FOR DEFECT DETECTION**

(30) Priority: 26.03.2025 JP 2025051067
(71) Applicant: SCREEN Holdings Co., Ltd., Kyoto-shi, Kyoto 602-8585 (JP)
(72) Inventor: OKAYAMA, Toshiyuki, Kyoto-shi, Kyoto, 602-8585 (JP); NOGUCHI, Takeshi, Kyoto-shi, Kyoto, 602-8585 (JP)
(74) Representative: Goddar, Heinz J.

(57) **Abstract**

A method of creating a basic model for multiple machine learning models corresponding to multiple defect detection criteria. The method includes the steps of preparing first learning data (Da) (S101), extracting feature values from respective image data items (Di) of the first learning data (S102), performing clustering of the image data items in accordance with the feature values (S103), extracting some image data items-in accordance with the clustering result (S 104 to S 107), and creating a basic model (Mb) by performing learning using basic data (Db) (S108). The basic data includes data on common defectives identified as defectives in common on all of the defect detection criteria. By performing individual learning processing corresponding to the individual defect detection criteria on the basic model (Mb), it is possible to efficiently create a model with desired accuracy. That is, machine learning models corresponding to the individual defect detection criteria can be created with high accuracy and efficiency.

## Description

### BACKGROUND OF THE INVENTION

### Field of the Invention

The present invention relates to a technique for creating a machine learning model for defect detection.

### Description of the Background Art

Machine learning models using captured images of products for defect detection have conventionally been used to detect defects in industrial products. In order to accurately perform learning on machine learning models for defect detection, a large volume of learning data needs to be prepared.

In particular, in order to create an appropriate machine learning model for each user, users are required to prepare a large volume of learning data and label the learning data. This necessitates considerable cost. Particularly, acquiring products with serious defects is difficult, making it generally hard to prepare learning data with serious defects.

Japanese Patent Application Laid-Open No. 2021-33564 discloses a conventional method of reducing the cost of collecting learning data. The method disclosed in Japanese Patent Application Laid-Open No. 2021-33564 can reduce labeling costs, but has difficulties in reducing costs associated with the collection of image data for learning data.

In order to reduce users' costs associated with the preparation of learning data, manufacturers have also adopted methods of preparing pre-trained models. However, the pre-trained models are general models and differ from models that are prepared for each user or each inspection criterion. Besides, if the manufactures receive learning data from a plurality of users when creating the pre-trained models, inspection standards may vary. In this case, data items obtained from different labeling standards are mixed, resulting in creation of the pre-trained models having ambiguous labeling standards.

### SUMMARY OF THE INVENTION

It is an object of the present invention to provide a technique for creating machine learning models corresponding to individual defect detection criteria with high accuracy and efficiency.

To solve the problem described above, a first aspect is creation method of creating a basic model serving as a basis for a plurality of machine learning models corresponding to a plurality of defect detection criteria. The creation method causes a computer to execute a) acquiring, as learning data for the basic model, first learning data that contains a plurality of image data items, b) extracting a feature value for each of the image data items of the first learning data, c) performing clustering of the image data items contained in the first learning data in accordance with the feature values, d) creating basic data by extracting some of the image data items contained in the first learning data in accordance with a result of the clustering, and e) creating a basic model by performing learning using the basic data on a machine learning model. The basic data includes data on a common defective that is identified as a defective in common on all of the defect detection criteria.

A second aspect is the creation method according to the first aspect, in which the basic data consists solely of the data on the common defective.

A third aspect is the creation method according to the first aspect, in which the basic data consists solely of data on a common non-defective that is identified as a non-defective in common on all of the defect detection criteria, and the data on the common defective.

A fourth aspect is the creation method according to the first aspect, in which the operation d) includes d1) presenting some of the image data items contained in the first learning data to a user in accordance with the result of the clustering, d2) receiving, from the user, input of labels corresponding to the image data items presented, and d3) creating the basic data by extracting, based on the labels input in the operation d2), the image data items including image data items that are labeled as the common defective.

A fifth aspect is a method of creating a machine learning model for defect detection. The method includes steps that are executed by one or a plurality of computers, the steps including p) creating the basic model by the creation method according to any one of the first to fourth aspects, q) acquiring second learning data in which image data items on a subject of defect detection are labeled based on individual ones of the defect detection criteria, and r) performing additional learning using the second learning data on the basic model.

A sixth aspect is the creation method according to the fifth aspect, in which in the operation r), the additional learning is performed on all layers of the basic model.

According to the first to sixth aspects, the basic model is created based on the data items on common defectives. Accordingly, by performing individual learning on the created basic model, it is possible to create a plurality of machine learning models corresponding to a plurality of defect detection criteria with high accuracy and efficiency.

These and other objects, features, aspects and advantages of the present invention will become more apparent from the following detailed description of the present invention when taken in conjunction with the accompanying drawings.

### [Brief Description of Drawings]

Fig. 1 is a block diagram showing a configuration of a machine-learning-model creation system.
Fig. 2 is a functional block diagram of the machine-learning-model creation system.
Fig. 3 is a flowchart for basic model creation processing.
Fig. 4 is a flowchart for individual learning processing.

### DESCRIPTION OF THE PREFERRED EMBODIMENTS

Hereinafter, an embodiment of the present invention will be described with reference to the accompanying drawings. Note that constituent elements described in this embodiment are merely examples, and the scope of the present invention is not intended to be limited thereto. To facilitate understanding of the drawings, the size and number of each part are exaggerated or simplified as necessary.

### 1. Machine-Learning-Model Creation System

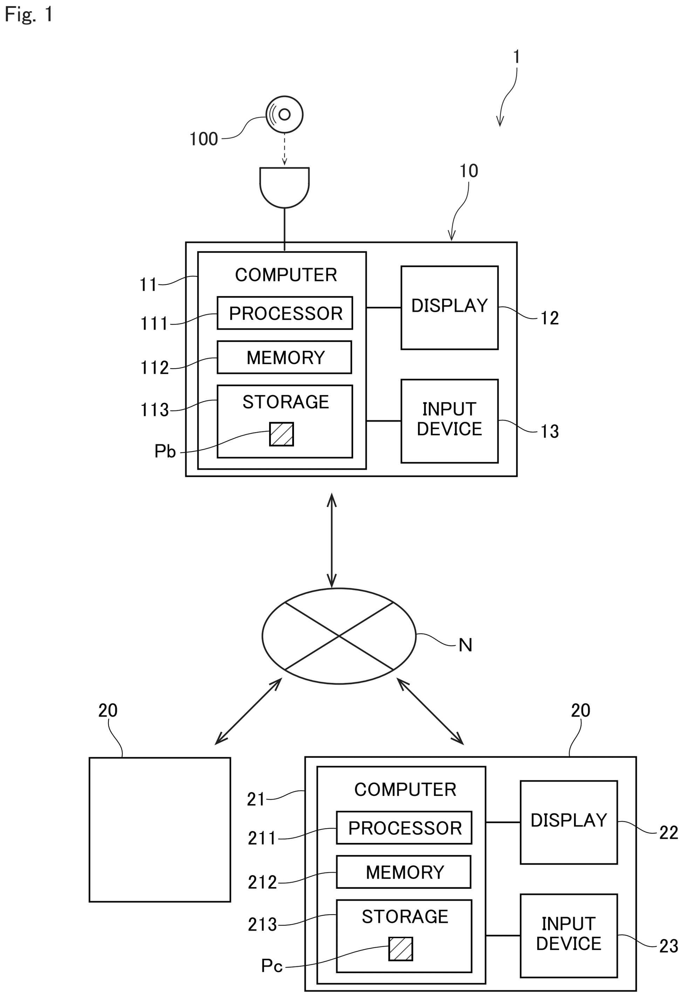

Fig. 1 is a diagram showing a configuration of a machine-learning-model creation system 1 that executes a method of creating a machine learning model according to one embodiment of the present invention. As shown in Fig. 1, the machine-learning-model creation system 1 includes a basic-model creation computer 10 and a plurality of user computers 20. In Fig. 1, there are two user computers 20. The basic-model creation computer 10 and the user computers 20 are capable of communication via a network N.

The machine-learning-model creation system 1 is a system designed to create machine learning models corresponding to individual defect detection criteria with high accuracy and efficiency. The basic-model creation computer 10 is, for example, a computer owned by a manufacturer that produces and sells defect detection devices or defect detection programs. The user computers 20 are, for example, computers owned by users who have purchased defect detection devices or defect detection programs.

On the basic-model creation computer 10, the manufacturer creates a basic model Mb that has learned about defects common on a plurality of defect detection criteria. Then, on the user computers 20, users perform additional learning corresponding to the individual defect detection criteria on the basic model Mb so as to create machine learning models corresponding to the individual defect detection criteria, i.e., individual models Mc, with high accuracy and efficiency. Note that the individual models Mc, which are final machine learning models, may be created by the manufacturer upon request from users. Alternatively, one user may create a plurality of individual models Mc corresponding to a plurality of defect detection criteria.

The basic-model creation computer 10 includes a computer 11, a display 12, and an input device 13. The computer 11 includes a processor 111 such as a CPU, memory 112 such as RAM, and a storage 113 such as a hard disk drive. The display 12 displays images that are output from the computer 11. The display 12 is, for example, a liquid crystal display such as a PC monitor. The input device 13 can input commands to the computer 11. The input device 13 includes, for example, a keyboard and a mouse.

The memory 112 and the storage 113 are connected to the processor 111 via bus wiring (not shown). The storage 113 stores a computer program Pb. The computer program Pb is application software that causes the computer 11 to execute various processes related to basic model creation processing. The processor 111 loads the computer program Pb stored in the storage 113 into the memory 112 and sequentially executes codes contained in the computer program Pb. This allows the basic-model creation computer 10 to execute the basic model creation processing and create the basic model Mb.

The computer program Pb is read from a storage medium 100 such as a CD or DVD and installed on the computer 11. Alternatively, the computer program Pb may be downloaded to the computer 11 via the network N such as the Internet.

Each user computer 20 includes a computer 21, a display 22, and an input device 23. The computer 21 includes a processor 211 such as a CPU, memory 212 such as RAM, and a storage 213 such as a hard disk drive. The user computer 20 is a general computer similar to the basic-model creation computer 10.

The storage 213 stores a computer program Pc. The computer program PC is application software that causes the computer 21 to execute various processes related to individual model creation processing. The processor 211 loads the computer program Pc stored in the storage 213 into the memory 212 and sequentially executes codes contained in the computer program Pc. This allows the user computer 20 to execute the individual model creation processing and create the individual model Mc.

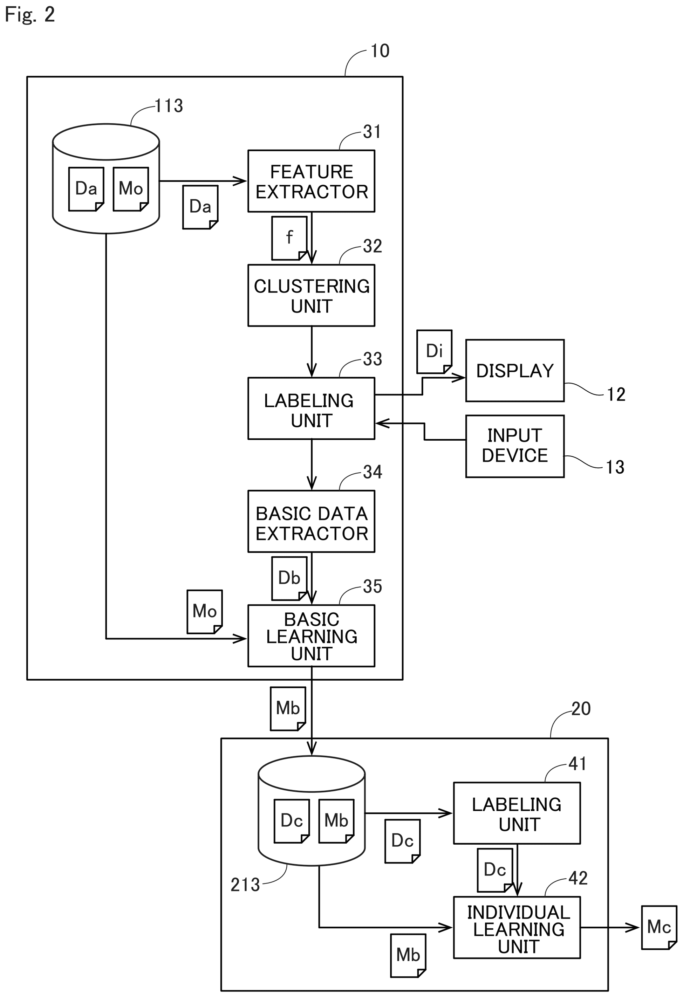

Fig. 2 is a functional block diagram of the machine-learning-model creation system 1. The computer 11 of the basic-model creation computer 10 includes a feature extractor 31, a clustering unit 32, a labeling unit 33, a basic data extractor 34, and a basic learning unit 35 as functional parts realized by the processor 111 operating in accordance with the aforementioned computer program Pb,.

The computer 21 of each user computer 20 includes a labeling unit 41 and an individual learning unit 42 as functional parts realized by the processor 211 operating in accordance with the aforementioned computer program Pc.

### 2. Procedure for Creating Machine Learning Model

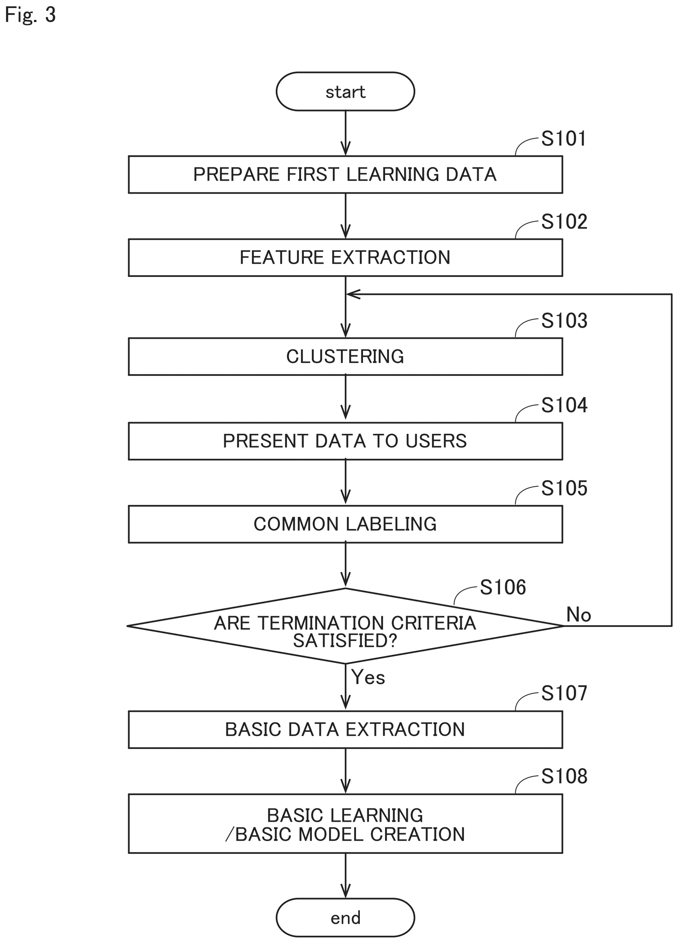

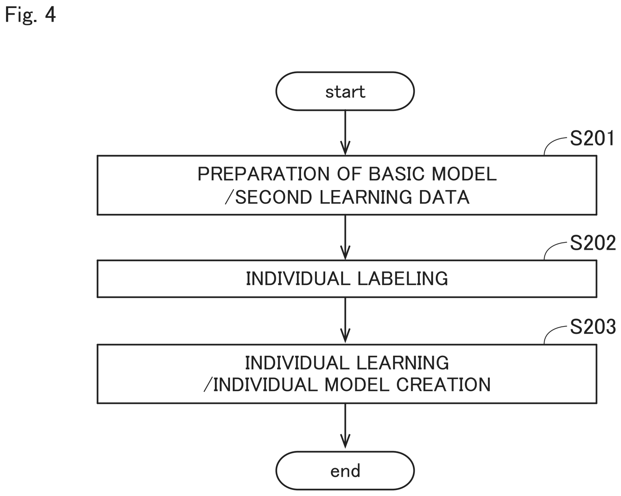

Next, a procedure for creating the individual models Mc corresponding to the individual defect detection criteria in the machine-learning-model creation system 1 is described with reference to Figs. 3 and 4. Fig. 3 is a flowchart for the basic model creation processing performed on the basic-model creation computer 10. Fig. 4 is a flowchart for individual learning processing performed on each user computer 20.

In the case of creating an individual model Mc, firstly, a manufacturer staff causes the basic-model creation computer 10 to perform basic model creation processing so as to create the basic model Mb. Then, the basic model Mb is transferred to each user, i.e., each user computer 20, via the network N. Subsequently, each user computer 20 performs individual learning processing on the basic model Mb so as to create an individual model Mc corresponding to an individual defect detection criterion.

As shown in Fig. 3, firstly, the basic-model creation computer 10 receives input of first learning data Da as learning data for creating the basic model Mb (step S101: basic-learning-data preparation step). The basic-model creation computer 10 also receives input of a base model Mo that serves as a basis for the basic model Mb. The first learning data Da contains a plurality of image data items Di obtained by capturing images of a subject of inspection. For example, the first learning data Da and the base model Mo are input to the basic-model creation computer 10 via the network N and stored in the storage 113 of the basic-model creation computer 10.

Then, the feature extractor 31 reads the first learning data Da from the storage 113 and extracts features from each of the image data items Di contained in the first learning data Da (step S102: feature extraction step). Specifically, a plurality of feature values f are calculated from each image data item Di through a neural network algorithm, an autocorrelation algorithm, a geometrical feature extraction algorithm, a moment feature extraction algorithm, or an algorithm utilizing pixel values. The feature extraction algorithm is, however, not limited to the examples described above. Alternatively, a plurality of algorithms may be used in combination to extract features.

Then, based on the feature values f, the clustering unit 32 performs clustering of the first learning data Da in a feature space S (step S103: clustering step). The feature space S is created according to the number of dimensions of the feature values f. The clustering can be implemented by a non-parametric estimation method such as kernel density estimation or by a parametric estimation method. Accordingly, data items with similar feature values in the first learning data Da are classified into the same cluster.

Then, according to the result of clustering, the labeling unit 33 presents some image data items Di contained in the first learning data Da to the user (step S104: data presentation step). Specifically, some image data items Di contained in the first learning data Da are displayed on the display 12 in order to prompt the user to input labels. Then, the labeling unit 33 receives input from the user.

In the present embodiment, it is preferable that the labeling unit 33 assigns a label to at least one image data item Di included in each of a plurality of classes separated by clustering. Thus, in the first execution of the data presentation step S104, the labeling unit 33 displays at least one image data item Di for each of all classes. In the second and subsequent executions of the data presentation step S104, if a predetermined number or more of image data items Di in each class have been labeled, the labeling unit 33 may preferentially present other image data items Di included in classes that contain image data items Di labeled as common defectives, which will be described later.

When the manufacturer staff has inputted labels that are assigned to the presented image data items Di via the input device 13, the labeling unit 33 assigns the input labels received from the manufacturer staff to the presented image data items Di (step S105: common labeling step).

In the present embodiment, there are three types of labels to be assigned, including "common non-defective", "common defective", and "others". Here, "common defective" refers to a subject of inspection that is labeled as a defective in common on all of the defect detection criteria. "Common non-defective" refers to a subject of inspection that is labeled as a non-defective in common on all of the defect detection criteria. Hereinafter, the types of labels assigned in the common labeling step S 105 are referred to as "common labels".

Then, the labeling unit 33 determines whether a labeling termination criterion is satisfied (step S106). The labeling termination criterion may, for example, be that all of the image data items Di contained in the first learning data Da have been labeled. Alternatively, the labeling termination criterion may, for example, be that there is a labeled image data item Di in all of the classes, and that labels have been assigned to all image data items Di contained in classes that include already labeled common defectives.

If the labeling termination criterion is not satisfied (No in step S106), the procedure returns to step S103 and repeats the clustering step S103, the data presentation step S104, and the common labeling step S105. Note that the clustering step S103 may be performed each time in the second and subsequent executions, or may be performed only when a criterion that requires re-clustering is satisfied, such as when different labels are assigned within a single class.

If the labeling termination criterion is satisfied (Yes in step S106), the basic data extractor 34 extracts basic data Db from the first learning data Da according to the result of clustering (step S107: basic data extraction step). Specifically, the basic data extractor 34 extracts image data items Di that are assigned with the common label "common defective" and image data items Di that are assigned with the common label "common non-defective" from the first learning data Da that has undergone clustering and labeling, and provides the extracted image data items as the basic data Db (step S107: basic data extraction step).

Thereafter, the basic learning unit 35 performs learning processing using the basic data Db, i.e., basic learning processing, on a machine learning model. This yields the basic model Mb (step S108: basic learning step).

As described above, in the present embodiment, the basic-model creation computer 10 performs labeling through dialogic search, i.e., repeats the presentation of image data items Di to the users and the acquisition of labels from the users. This allows accurate and efficient labeling of the image data items Di contained in the first learning data Da.

In the present embodiment, the basic data Db consists solely of image data items Di on common non-defectives and image data items Di on common defectives. Thus, the basic model Mb created through the basic learning processing is a machine learning model that has learned about common non-defectives and common defectives.

In the present embodiment, three types of common labels including "common non-defective", "common defective", and "others", are assigned in the common labeling step S105. However, the common labels to be assigned may be of only two types including "common defective" and "others". In that case, the basic data Db consists solely of the image data items Di on common defectives, and the basic model Mb is a machine learning model that has learned about common defectives.

In the present embodiment, the common labels assigned in the common labeling step S105 include only one type of label for common defectives. However, the common defectives may be assigned a plurality of labels according to the defect type. For example, the common defectives may be labeled for each defect type, such as scratches, chips, or stains.

When the basic learning processing shown in Fig. 3 is completed, the basic-model creation computer 10 transmits the above created basic model Mb to the user computers 20. Then, the individual learning processing shown in Fig. 4 is performed on each user computer 20.

In the individual learning processing, firstly, the basic model Mb and second learning data Dc are prepared as shown in Fig. 4 (step S201: preparation step). Specifically, the basic model Mb is input from the basic-model creation computer 10 to the user computers 20 via the network N. The user computers 20 also receive input of the second learning data Dc that contains a plurality of image data items Dj. The basic model Mb and the second learning data Dc are then stored in the storage 213 of each user computer 20. The image data items Dj contained in the second learning data Dc may be obtained by a defect detection device owned by a user who uses the user computer 20, or may be obtained by any other means. The second learning data Dc may also contain image data items Di that are labeled "others" among the image data items D1 contained in the first learning data Da.

Then, the labeling unit 41 reads the second learning data Dc from the storage 213 and assigns a label to every one of the image data items Dj contained in the second learning data Dc (step S202: individual labeling step). The types of labels assigned in the individual labeling step S202 are hereinafter referred to as "individual labels".

For example, there are two types of individual labels including "non-defective" and "defective". Defect detection criteria, i.e., the boundary between the individual label "non-defective" and the individual label "defective", may vary for each user or for each type of the subject of inspection, or may vary by application even for the same user and the same subject of inspection. Thus, it is necessary to perform individual labeling based on the defect detection criteria.

The range of the individual label "non-defective" includes a total range of the common label "common non-defective" as well as a 0% to 100% range of the common label "others". The range of the individual label "defective" includes a total range of the common label "common defective" as well as the remaining 100% to 0% range of the common label "others".

Note that the individual labeling step S202 performed on the user computers 20 may be performed in the same manner as the common labeling processing (steps S103 to S106) performed on the basic-model creation computer 10, or may be performed by a different method.

After the individual labeling of all the image data items Dc is completed, the individual learning unit 42 performs additional learning using the individually labeled second learning data Dc on the basic model Mb, so as to create the individual model Mc (step S203: individual learning step). At this time, the individual learning unit 42 performs machine learning on all layers of the basic model Mb having a multiple layered structure.

Conventionally, in order to reduce users' costs associated with the preparation of learning data, a method is known in which manufacturers prepare pre-trained models, and users perform additional learning corresponding to individual defect detection criteria on the pre-trained models. In such a method, the additional learning is often performed only on the output layer of a machine learning model having a multiple layered structure, or only on some layers of a machine learning model including the output layer.

However, in cases such as where the pre-trained models are obtained from ambiguous defect detection criteria or where the defect detection criteria used for the pre-trained models are different from defect detection criteria used by users, it is difficult to achieve sufficient accuracy through so-called fine-tuning or transfer learning.

In view of this, the method according to the present invention performs machine learning on the basic model Mb by using, as common defectives, subjects of inspection with serious defects that are recognized as defects in common on all defect detection criteria. Therefore, even if it is difficult for users to obtain a large number of subjects of inspection with serious defects, the individual models Mc can be created with reference to the basic model Mb created through the basic learning processing using common defectives. Accordingly, the individual models Mc are machine learning models that have learned about serious defects.

### 3. Subject of Inspection

The individual models Mc created by the above method can be used for defect detection and classification of defect types using captured image data on a subject of inspection, such as visual inspection of cast parts or defect detection/inspection of precision semiconductor patterns. The individual models Mc can also be used in a false report filter that detects false reports (over-detection) in such inspections.

### 4. Variations

Although one embodiment has been described thus far, the present invention is not limited to the example as described above, and may be modified in various ways.

In the above-described embodiment, in order to detect the presence or absence of defects, only "common defective" and "common non-defective" serve as the common labels for the basic data Db, and only "defective" and "non-defective" serve as the individual labels for the second learning data Dc. However, in the case where the goal is not only to detect the presence or absence of defects but also to detect the types of defects, the common labels on common defectives need to include a plurality of types of common defective labels for each defect type, and the individual labels on defectives need to include a plurality of types of defectives for each defect type.

In the above-described embodiment, the basic data Db includes not only the image data items Di on common defectives, but also the image data items D1 on common non-defectives. However, the boundary of criteria for common defectives is easy to define; for example, the range where product performance issues arise is determined as a common criterion for defectives among a plurality of users. On the other hand, the boundary of absolute criteria for non-defectives, i.e., criteria that a subject of inspection is recognized as a non-defective in common among a plurality of users, is difficult to define. Therefore, the basic data Db may include only the image data items Di on common defectives, without establishing any common label for non-defectives.

While the invention has been shown and described in detail, the foregoing description is in all aspects illustrative and not restrictive. It is therefore understood that numerous modifications and variations that are not described above can be devised without departing from the scope of the invention. The configurations in the embodiment and variations described above may be appropriately combined or may be appropriately omitted as long as there are no mutual inconsistencies.

## Claims

1. A creation method of creating a basic model (Mb) serving as a basis for a plurality of machine learning models (Mc) corresponding to a plurality of defect detection criteria,
the creation method causing a computer (10) to execute:
a) acquiring, as learning data for the basic model (Mb), first learning data (Da) that contains a plurality of image data items (Di);
b) extracting a feature value (f) for each of the image data items (Di) of the first learning data (Da);
c) performing clustering of the image data items (Di) contained in the first learning data (Da) in accordance with the feature values (f);
d) creating basic data (Db) by extracting some of the image data items (Di) contained in the first learning data (Da) in accordance with a result of the clustering; and
e) creating a basic model (Mb) by performing learning using the basic data (Db) on a machine learning model (Mo),
wherein the basic data (Db) includes data on a common defective that is identified as a defective in common on all of the defect detection criteria.

2. The creation method according to claim 1, wherein
the basic data (Db) consists solely of the data on the common defective.

3. The creation method according to claim 1, wherein
the basic data (Db) consists solely of:
data on a common non-defective that is identified as a non-defective in common on all of the defect detection criteria; and
the data on the common defective.

4. The creation method according to claim 1, wherein
the operation d) includes:
d1) presenting some of the image data items (Di) contained in the first learning data (Da) to a user in accordance with the result of the clustering;
d2) receiving, from the user, input of labels corresponding to the image data items (Di) presented; and
d3) creating the basic data (Db) by extracting, based on the labels input in the operation d2), the image data items (Di) including image data items that are labeled as the common defective.

5. A method of creating a machine learning model (Mc) for defect detection,
the method comprising steps that are executed by one or a plurality of computers (10, 20), the steps including:
p) creating the basic model (Mb) by the creation method according to any one of claims 1 to 4;
q) acquiring second learning data (Dc) in which image data items on a subject of defect detection are labeled based on individual ones of the defect detection criteria; and
r) performing additional learning using the second learning data (Dc) on the basic model (Mb).

6. The creation method according to claim 5, wherein
in the operation r), the additional learning is performed on all layers of the basic model (Mb).
